Europäisches Patentamt

European Patent Office

Office européen des brevets

(19)

(11) Veröffentlichungsnummer: **0 260 408 B1**

# EUROPÄISCHE PATENTSCHRIFT

(12)

(45) Veröffentlichungstag der Patentschrift: **26.06.91**

(51) Int. Cl.⁵: **G01P 5/00**

(21) Anmeldenummer: **87110733.0**

(22) Anmeldetag: **24.07.87**

(54) **Vorrichtung zur Messung von Strömungsvektoren in Gasströmungen.**

(30) Priorität: **19.09.86 DE 3631900**

(43) Veröffentlichungstag der Anmeldung:
**23.03.88 Patentblatt 88/12**

(45) Bekanntmachung des Hinweises auf die
Patenterteilung:
**26.06.91 Patentblatt 91/26**

(84) Benannte Vertragsstaaten:
**DE FR GB**

(56) Entgegenhaltungen:
**FR-A- 2 363 800**
**GB-A- 2 109 548**

**REGELUNGSTECHNISCHE PRAXIS, Band 23,
Nr. 12, Dezember 1981, Seiten 415-421, München, DE; H. MARGUERRE: "Laseroptische
Mess- und Prüfgeräte"**

**APPLIED OPTICS, Band 19, Nr. 17, 1. September 1980, Seiten 2930-2933, Optical Society
of America, New York, US; H.B. BARNES et
al.: "Two-color two-spot laser velocimeter"**

(73) Patentinhaber: **Deutsche Forschungsanstalt
für Luft- und Raumfahrt e.V.
Linder Höhe Postfach 90 60 58
W-5000 Köln 90(DE)**

(72) Erfinder: **Schodl, Richard, Dr.
Rembrandstrasse 65
W-5210 Troisdorf-Eschmar(DE)**

(74) Vertreter: **Selting, Günther, Dipl.-Ing. et al
Deichmannhaus am Hauptbahnhof
W-5000 Köln 1(DE)**

## Beschreibung

Die Erfindung betrifft eine Vorrichtung zur Messung von Strömungsvektoren in Gasströmungen nach dem Oberbegriff des Patentanspruchs 1.

DE-PS 24 49 358 beschreibt eine optische Vorrichtung, bei der ein von einer Lichtquelle ausgehender Lichtstrahl in zwei Teilstrahlen aufgeteilt wird, von denen jeder im Meßvolumen fokussiert wird. Wenn ein in der Strömung enthaltenes Festkörperteilchen eine Fokussierungsstelle passiert, leuchtet es auf. Dieses Aufleuchten wird von einer Auswertevorrichtung erkannt. Ein Teilchen, dessen Strömungsvektor mit derjenigen Geraden übereinstimmt, die durch beide Fokussierungsstellen hindurchgeht, erzeugt an der ersten Fokussierungsstelle einen Startimpuls und an der zweiten Fokussierungsstelle einen Stopimpuls. Aus dem zeitlichen Abstand dieser beiden Impulse kann die Strömungsgeschwindigkeit, also der Betrag des Vektors, erkannt werden. Dieses Zwei-Fokus-Verfahren erfordert einen großen zeitlichen Meßaufwand. Ferner können nur diejenigen Komponenten von Strömungsvektoren gemessen werden, die in einer senkrecht zur optischen Achse des Systems verlaufenden Ebene liegen. Die Ebene muß durch eine Meßreihe ermittelt werden. Die parallel zur optischen Achse verlaufende Komponente kann nicht bestimmt werden.

DE-PS 31 45 987 beschreibt eine Weiterbildung des genannten Zwei-Fokus-Verfahrens, bei der auch eine Messung derjenigen Komponente eines Strömungsvektors möglich ist, die parallel zur optischen Achse des Systems verläuft, so daß die Strömungsvektoren vollständig nach Betrag und Richtung erfaßt werden können. Bei diesem Verfahren, das als Drei-Komponenten-Verfahren bezeichnet wird, wird ein mehrfarbiger Laserstrahl in zwei verschiedenfarbige Komponenten zerlegt. Jede dieser Komponenten wird in zwei Teilstrahlen aufgespalten, die senkrecht zueinander polarisiert sind. Auf diese Weise entstehen insgesamt vier Teilstrahlen, von denen sich jeweils zwei Teilstrahlen im Meßvolumen schneiden und eine Fokussierungsstelle bilden. Die eine Fokussierungsstelle liegt auf der optischen Achse des Systems. Durch Drehen eines Bilddrehprismas kann die Position der anderen Fokussierungsstelle auf einfache Weise verändert werden. Zur Auswertung der von den strömenden Teilchen erzeugten Lichtblitze wird die Strahlung dieser Lichtblitze nach Polarisation und Farbe selektiert, um die Start- und Stopimpulse zu erzeugen.

Die bekannten Vorrichtungen benötigen infolge der Strahlenaufteilung und der nachfolgenden Ausspiegelung der vom Meßvolumen ausgehenden Strahlungskomponenten aus der einfallenden Strahlung sowie zur räumlichen Trennung der Strahlungskomponenten viel Platz, so daß die Meßapparatur großvolumig ist und unter engen räumlichen Verhältnissen nicht eingesetzt werden kann.

Der Oberbegriff des Patentanspruchs 1 geht aus von einer Vorrichtung wie sie aus FR-A-2 363 800 bekannt ist. Bei dieser Vorrichtung wird das von einem Laser ausgesandte Licht durch einen Strahlenteiler in zwei Strahlen zerlegt, die von einem Spiegel einer aus einem Mehrfach-Prisma bestehenden Bilddrehvorrichtung zugeführt werden. Im Strahlenweg des hinlaufenden Lichts befindet sich hinter der Bilddrehvorrichtung ein erstes Linsensystem, das die Strahlen auf unterschiedliche Stellen im Meßvolumen fokussiert. Das an den Fokussierungsstellen ausgesandte rücklaufende Licht wird durch das feststehende erste Linsensystem und die Bilddrehvorrichtung hindurch auf eine Lochblende mit zwei Löchern fokussiert. Hinter der Lochblende befindet sich das feststehende zweite Linsensystem, das die beiden Teilstrahlen auf die Eingänge von zwei Lichtleitern fokussiert, welche an eine Auswerteschaltung angeschlossen sind. Die Bilddrehvorrichtung kann von einem Motor um die optische Achse herum gedreht werden, um die Richtung der durch die beiden Fokussierungsstellen hindurchgehenden Geraden zu verändern und somit die Meßrichtung, d.h. die Richtung in der jeweils der Strömungsvektor gemessen wird, zu verändern. Hierbei ist zur Veränderung der Meßvorrichtung die Bilddrehvorrichtung zusätzlich zu den übrigen optischen Komponenten vorhanden. Die Bilddrehvorrichtung, die aus mehreren Prismen besteht, vergrößert somit den Aufwand und sie hat ferner den Nachteil zusätzlicher Lichtverluste sowohl im hinlaufenden als auch im rücklaufenden Strahlenweg.

Aus der Zeitschrift "Regelungstechnische Praxis", Band 23, Nummer 12, Dezember 1981, 415-421, ist ein Meßsystem zur Kontrolle radioaktiver Prozeßströme basierend auf der Zweistrahl-Laser-Doppler-Anemometrie bekannt, bei dem die passiven optischen Bauelemente wie Strahlteiler, Spiegel, erstes Linsensystem und zweites Linsensystem in einem feststehenden optischen Kopf untergebracht sind, aus dem heraus das Licht im Meßvolumen fokussiert wird. An den optischen Kopf sind seitlich ein von der Lichtquelle kommender erster Lichtleiter und ein zu einem optischen Empfänger führender zweiter Lichtleiter angeschlossen. Der Vorteil des optischen Kopfs besteht darin, daß der wartungsarme Kopf unbedenklich in radioaktiver oder stark elektromagnetisch belaster Umgebung eingesetzt werden kann, während die wartungsintensiven empfindlichen Komponenten in geschützter Umgebung bleiben. Der optische Kopf kann durch Veränderung der Geometrie an die jeweils gegebene Aufgabe angepaßt werden, worunter zu verstehen ist, daß die im optischen Kopf enthaltenen Komponenten variiert werden können.

Der Erfindung liegt die Aufgabe zugrunde, eine Vorrichtung nach dem Oberbegriff des Patentanspruchs 1 derart weiterzubilden, daß sie an Stellen mit geringem Platzangebot einsetzbar ist und der Meßaufbau vereinfacht und damit übersichtlicher wird.

Die Lösung dieser Aufgabe erfolgt erfindungsgemäß mit den im Patentanspruch 1 angegebenen Merkmalen.

Nach der Erfindung sind die optischen Teile, wie Linsensysteme, Strahlenteiler u.dgl. in einem kleinformatigen langgestreckten optischen Kopf untergebracht, der eine separate Baueinheit bildet und der über Lichtleiter mit Licht versorgt wird und aus dem die vom Meßvolumen kommenden Lichtstrahlen ebenfalls über Lichtleiter ausgekoppelt werden, um der externen Lichtaufnahmevorrichtung zugeführt zu werden. Die Erfindung ermöglicht es nicht nur, mit einem kleinformatigen optischen Kopf ohne räumliche Behinderung nahe an das Meßvolumen heranzukommen, sondern sie erlaubt auch einen modularen Aufbau des Systems, wobei ggf. unterschiedliche optische Köpfe wahlweise an die Laserstrahl-Lichtquelle bzw. an die Lichtaufnahmevorrichtung angeschlossen werden können. Das System ist also nicht nur vom räumlichen Aufbau her, sondern auch bezüglich der Kombination seiner einzelnen Komponenten vielseitig variierbar. Die Erfindung ist sowohl bei dem Zwei-Komponenten-Meßverfahren als auch bei dem Drei-Komponenten-Meßverfahren anwendbar. Die Aufteilung des von der Laser-Lichtquelle ausgehenden Lichtstrahls kann entweder in einer externen Aufteilungseinheit erfolgen, wobei dann zwei erste Lichtleiter an nebeneinanderliegenden Stellen in den optischen Kopf hineinführen, oder auch im Innern des optischen Kopfes, wobei der optische Kopf einen Strahlenteiler enthält.

Der optische Kopf ist vorzugsweise eine rohrförmige langgestreckte Einheit, die um ihre Längsachse, welche mit der optischen Achse des Systems zusammenfällt, drehbar ist. Auf diese Weise kann die Richtung der durch die Fokussierungsstellen hindurchgehenden Geraden durch einfache Drehung des optischen Kopfes verändert werden, so daß das System leicht auf Strömungsvektoren unterschiedlicher Richtungen verstellt werden kann.

Sämtliche Lichtleiter, die an den optischen Kopf angeschlossen sind, sind zweckmäßigerweise in einer gemeinsamen Umhüllung enthalten, die einen flexiblen Metallmantel aufweist. Diese Umhüllung erstreckt sich von dem optischen Kopf bis zu einer Verteilereinheit. Von der Verteilereinheit führen die Lichtleiter einerseits zu Ankopplungselementen, die den Laserstrahl in den bzw. die ersten Lichtleiter einkoppeln, und andererseits zu der Lichtaufnahmevorrichtung, in der das Licht aus den zweiten Lichtleitern austritt, um Fotoempfängern zugeführt zu werden.

Als erste Lichtleiter werden Einzelmode-Lichtleiter verwendet, die in einem Glasmantel einen lichtleitenden dünnen Kern von etwa 3 μm Durchmesser enthalten und die Eigenschaft haben, daß sie die Eigenschaften des Laserlichts nicht verändern. Diese Einzelmode-Lichtleiter sind schwierig anzukoppeln, und sie gehen vorzugsweise durchlaufend durch die Verteilereinheit hindurch bis zum optischen Kopf. Die für die Lichtrückleitung vorgesehenen zweiten Lichtleiter können Multimode-Lichtleiter sein, bei denen der Kern einen Durchmesser von etwa 50 μm hat. Solche Multimode-Lichtleiter leiten zwar das einfallende Licht weiter, jedoch treten infolge der Mehrfach-Wandreflexionen im Querschnitt des austretenden Lichtstrahls Überlagerungen auf, die ein fleckiges Bild dieses Lichtstrahls hervorrufen. Andererseits haben Multimode-Lichtleiter den Vorteil, daß sie relativ einfach angekoppelt werden können. Nach der Erfindung werden für die ersten (hinlaufenden) Lichtleiter Einzelmode-Lichtleiter und für die zweiten (zurücklaufenden) Lichtleiter Multimode-Lichtleiter benutzt.

Um das Laserlicht in die ersten Lichtleiter einzukoppeln, bedarf es einer genauen Justierung der Eingangsenden dieser Lichtleiter in bezug auf den Laserstrahl. Diese Justierung kann mit einer Steuereinheit hervorgerufen werden, der das Licht, das im optischen Kopf von einem ersten Lichtleiter empfangen wird, über einen dritten Lichtleiter zugeführt wird, der vom optischen Kopf zu der Steuereinheit führt. Durch die Steuereinheit kann die Lage des Ankopplungselementes, mit dem das Laserlicht in den ersten Lichtleiter eingekoppelt wird, in verschiedenen Freiheitsgraden verändert werden. Die Veränderung erfolgt in der Weise, daß die Einstellung des Ankopplungselementes fixiert wird, wenn über den dritten Lichtleiter angezeigt wird, daß der optische Kopf über den ersten Lichtleiter die maximale Lichtstärke empfängt.

Vorteilhafte Ausgestaltungen und Weiterbildungen der Erfindung sind in den Unteransprüchen angegeben.

Im folgenden werden unter Bezugnahme auf die Zeichnungen Ausführungsbeispiele der Erfindung näher erläutert.

Es zeigen:

Fig. 1 eine Prinzipdarstellung einer Ausführungsform der Gesamtvorrichtung,

Fig. 2 einen schematischen Längsschnitt des optischen Kopfes bei dem Ausführungsbeispiel von Fig. 1,

Fig. 3 einen Schnitt durch den optischen Kopf rechtwinklig zu demjenigen der Fig. 2,

Fig. 4 eine schematische Darstellung eines Ankopplungselementes zum Einkoppeln des Laserstrahls in einen ersten Lichtleiter,

Fig. 5 eine Verwendung des optischen Kopfes in Verbindung mit einer anderen Vorsatzoptik,

Fig. 6 in ähnlicher Darstellung wie Fig. 5 eine weitere Vorsatzoptik,

Fig. 7 einen schematischen Vertikalschnitt durch eine andere Ausführungsform des optischen Kopfes bei dem Drei-Komponenten-Meßverfahren, wobei - anders als in Fig. 2 - nur ein einziger erster Lichtleiter vorhanden ist,

Fig. 8 einen Vertikalschnitt des optischen Kopfes von Fig. 7,

Fig. 9 einen Vertikalschnitt durch einen optischen Kopf für ein Mehrfarbensystem, bei dem mehr als zwei Fokussierungsstellen im Meßvolumen erzeugt werden,

Fig. 10 einen Horizontalschnitt des optischen Kopfes der Fig. 9,

Fig. 11 einen Vertikalschnitt durch einen optischen Kopf mit mehr als drei Fokussierungsstellen, wobei die hinlaufenden Teilstrahlen sich hinter dem Meßvolumen kreuzen,

Fig. 12 einen Horizontalschnitt durch den optischen Kopf der Fig. 11,

Fig. 13 eine schematische Darstellung der Verwendung der Vorrichtung in einem Windkanal, und

Fig. 14 ein Beispiel mit polarisationsabhängiger Strahlaufteilung.

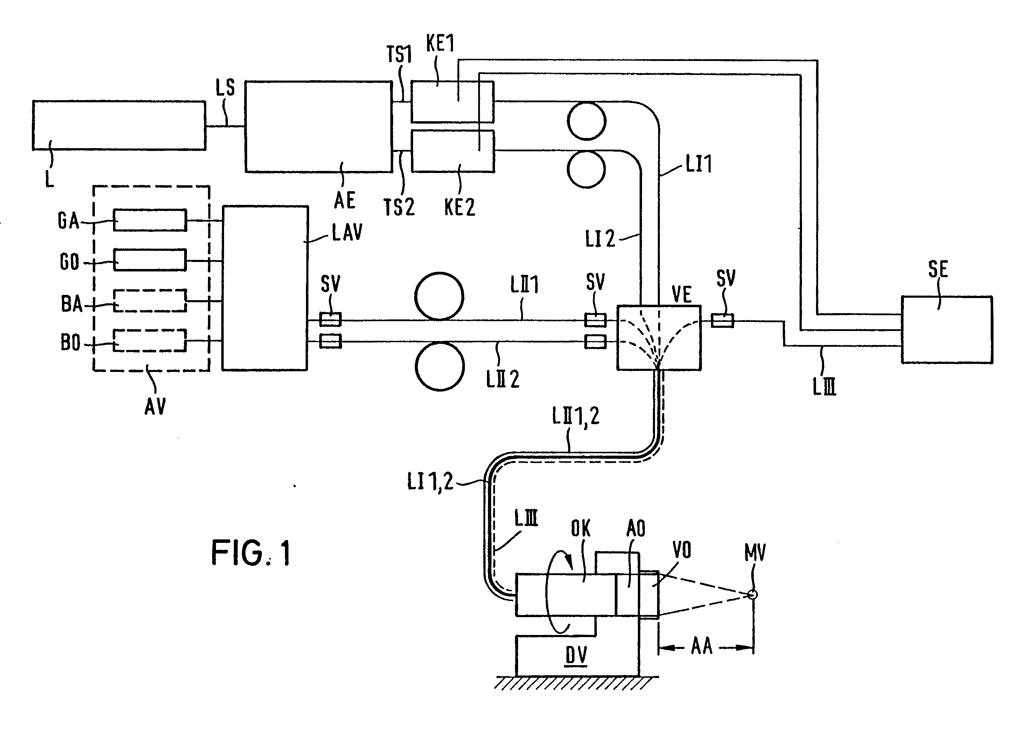

Bei dem Ausführungsbeispiel der Fign. 1 bis 4 ist eine Laser-Lichtquelle L vorgesehen, deren Laserstrahl LS auf eine Aufteilungseinheit AE gerichtet ist, die einen Dispersions-Strahlenteiler enthält und den Laserstrahl in zwei parallele Teilstrahlen TS1 und TS2 zerlegt. Bei einem mehrfarbigen Laserstrahl LS, der beispielsweise von einem Ar$^+$-Ionen-Laser erzeugt wird, besteht der Teilstrahl TS1 beispielsweise aus grünem Licht und der Teilstrahl TS2 aus blauem Licht. Jeder Teilstrahl wird über ein Kupplungselement KE1 bzw. KE2 an einen der ersten Lichtleiter LI1 bzw. LI2 angekuppelt. Die beiden ersten Lichtleiter LI1 und LI2 laufen ohne Unterbrechung durch die Verteilereinheit VE hindurch und führen zu dem optischen Kopf OK, der ein zylindrisches Gehäuse aufweist, das in einer Drehvorrichtung DV um seine Längsachse drehbar gelagert ist. Der optische Kopf OK weist an seinem vorderen Ende eine Austauschoptik AO auf, vor der eine auswechselbare Vorsatzoptik VO angeordnet ist, die relativ zu dem Kopf OK feststehend sein kann. Die Vorsatzoptik VO fokussiert die den optischen Kopf OK parallel verlassenden Sendestrahlen in einem Arbeitsabstand AA von etwa 100 mm. An der Fokussierungsstelle befindet sich das Meßvolumen MV in Innern eines Strömungskanals. Sobald ein in der Strömung enthaltenes Feststoffteilchen das Meßvolumen MV durchfließt, leuchtet es auf. Das dabei von dem Teilchen ausgesandte Licht wird über die zweiten Lichtleiter LII1 und LII2 aus dem optischen Kopf herausgeleitet und der Lichtaufnahmevorrichtung LAV zugeführt. Die Lichtaufnahmevorrichtung LAV ist an die Auswertevorrichtung AV angeschlossen, die einen Startimpulsgenerator GA für die Startimpulse des grünen Strahls, einen Stopimpulsgenerator GO für die Stopimpulse des grünen Strahls, einen Startimpulsgenerator BA für die Startimpulse des blauen Strahls und einen Stopimpulsgenerator BO für die Stopimpulse des blauen Strahls enthält. Die Zeitdifferenz zwischen Startimpulsen und Stopimpulsen gibt jeweils die Geschwindigkeit der Teilchen zwischen dem Passieren zweier Fokussierungsstellen an.

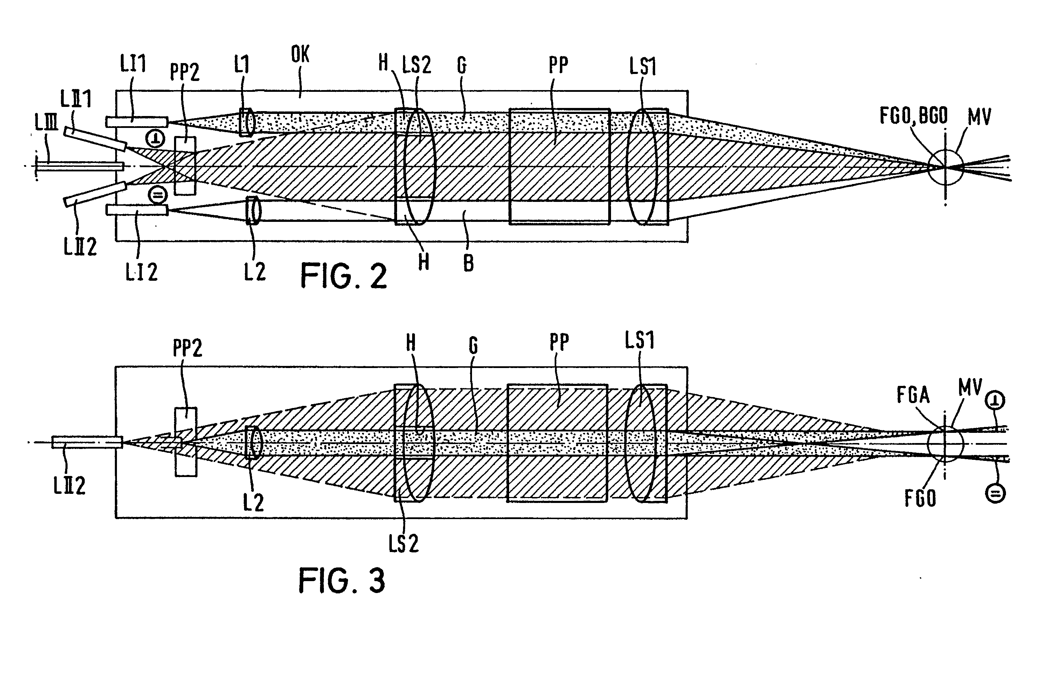

Fign. 2 und 3 zeigen den Strahlengang im optischen Kopf OK. Die aus den ersten Lichtleitern LI1 und LI2 divergent austretenden Strahlen werden durch jeweils eine Linse L1 bzw. L2 parallel gerichtet und durch je ein Loch H des zweiten Linsensystems LS2 hindurchgeleitet. Die grünen und blauen Strahlen G und B verlaufen parallel zur und im Abstand von der optischen Achse des optischen Kopfes OK und gelangen zu einem Polarisations-Strahlenteiler PP (Wollaston- oder Rochon-Prisma), wo die Aufteilung jedes Farbstrahls in zwei zueinander senkrecht polarisierte Strahlenpaare erfolgt. Die beiden verschiedenfarbigen Strahlenpaare G und B kreuzen sich ·gemäß Fig. 3 im Meßvolumen MV in zwei Punkten FGA, FGO, in denen das Licht unterschiedlich polarisiert ist. Das Licht, das von diesen beiden Punkten ausgeht, wenn sie von einem Teilchen passiert werden, wird von dem vor dem Polarisations-Strahlenteiler PP angeordneten ersten Linsensystem LS1 gesammelt und koaxial zur optischen Achse zurückgeleitet, was durch die Schraffur angedeutet ist. Entlang der optischen Achse ist hinter dem zweiten Linsensystem LS2 ein weiterer Polarisations-Strahlenteiler PP2 angeordnet, der dazu dient, das durch das gelochte zweite Linsensystem LS2 fokussierte Licht in die beiden zueinander senkrecht polarisierten Teile aufzuspalten und jede der beiden Polarisationskomponenten einem der zweiten Lichtleiter LII1, LII2 zuzuführen. Dadurch wird jeder der zweiten Lichtleiter LII1 und LII2 auf jeweils einen Kreuzungspunkt FGA bzw. FGO im Meßvolumen MV ausgerichtet. Die beiden zweiten Lichtleiter führen das zweifarbige Streulicht, das in der Lichtempfangsvorrichtung LAV in die Einzelfarben G und B aufgespalten wird. Dadurch erhält man vier nach Polarisationsrichtungen und Farben getrennte Signale, nämlich das grüne Startsignal für den Startsignalgenerator GA, das grüne Stopsignal für den Stopsignalgenerator GO, das blaue Startsignal für den Startsignalgenerator BA und das blaue Stopsignal für den Stopsignalgenerator BO.

Wie Fig. 2 zeigt, wird der einfallende grüne Strahl von dem Polarisations-Strahlteiler PF in zwei divergierende Strahlen zerlegt, die in einer gemeinsamen Ebene verlaufen. In gleicher Weise wird der unterhalb des grünen Strahls verlaufende blaue Strahl B ebenfalls in zwei senkrecht zueinander polarisierte Strahlen zerlegt, von denen jeder einen der grünen Strahlen im Meßvolumen MV schneidet. Die für die Erzeugung der Startimpulse vorgesehene grüne Fokussierungsstelle FGA fällt mit der blauen Start-Fokussierungsstelle zusammen, und die für die Erzeugung der Stopsignale vorgesehene grüne Fokussierungsstelle FGO fällt mit der blauen Stop-Fokussierungsstelle BGO zusammen, ähnlich wie dies in DE-PS 31 45 987 beschrieben ist. Der optische Kopf OK von Fig. 2 arbeitet also nach dem Drei-Komponenten-Verfahren. Durch Drehen des optischen Kopfes um seine Längsachse kann die Vektorrichtung, also die Richtung der durch die Fokussierungsstellen hindurchgehenden Geraden, verändert werden.

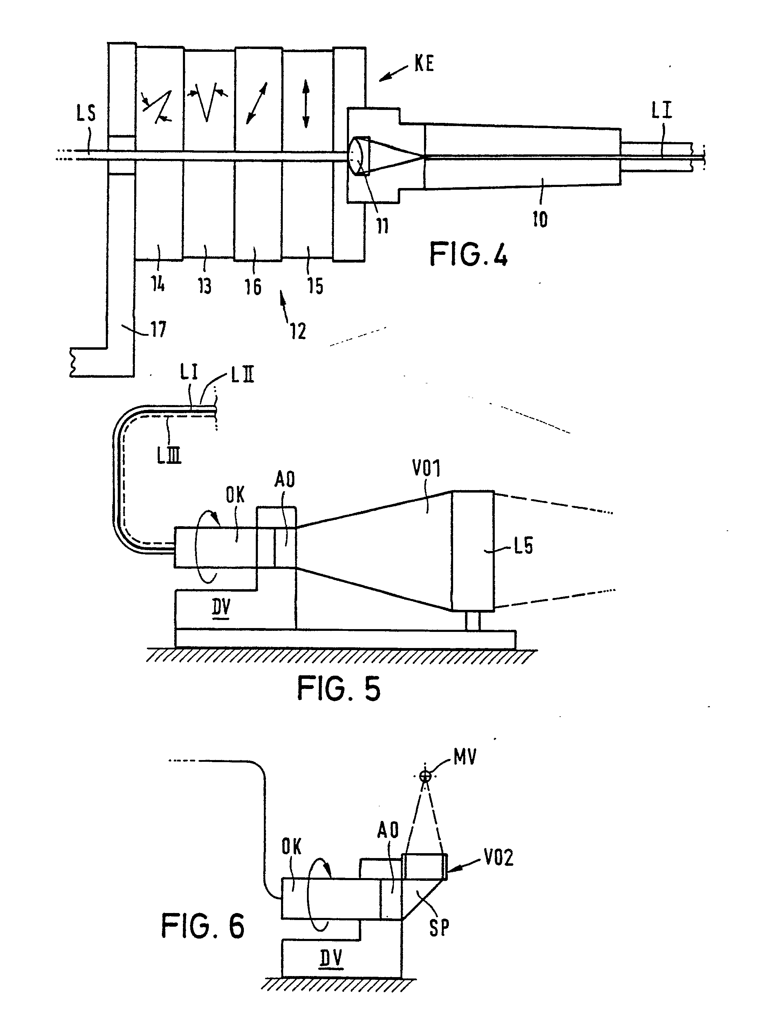

Zum Ankoppeln der ersten Lichtleiter LI1 und LI2 an die Aufteilungseinheit AE, also zum Einspeisen der Teilstrahlen TS1 und TS2 in die ersten Lichtleiter, dienen die Kopplungselemente KE1 und KE2. Ein solches Kopplungselement ist in Fig. 4 schematisch dargestellt. Das Kopplungselement weist einen mit dem Lichtleiter LI fest verbundenen Stecker 10 auf, in dem das Ende des Lichtleiters LI fixiert ist, und der eine auf das Ende des Lichtleiters fokussierte Linse 11 enthält. Dieser Stecker 10 wird an einer Justiervorrichtung 12 befestigt, die ihrerseits an einem mit dem Laser fest verbundenen Halter 17 angebracht ist und mechanische Verstellglieder 13,14,15,16 zum Verändern der Position des Steckers 10 in bezug auf den Halter 17 aufweist.

Die Verstellglieder 15 und 16 dienen zur Durchführung von Linearbewegungen quer zur Achse des Laserstrahls LS, und die Verstellglieder 13 und 14 dienen für eine Winkeldrehung in zwei senkrecht zueinander stehenden Ebenen. Auf diese Weise kann der Stecker 10 in bezug auf den Laserstrahl LS so ausgerichtet werden, daß das Licht des Laserstrahls den Kern des Lichtleiters LI voll trifft.

Die Justiervorrichtung 12 wird von der Steuereinheit SE (Fig. 1) in der Weise gesteuert, daß im optischen Kopf OK über den betreffenden ersten Lichtleiter LI die maximale Lichtmenge ankommt. Hierzu ist in das rückwärtige des optischen Kopfes OK (Fig. 2) ein dritter Lichtleiter LIII eingeführt, der das von den Lichtleitern LI1 und LI2 austretende und an den verschiedenen optischen Komponenten im optischen Kopf reflektierte und gestreute Licht auffängt. Dieser Lichtleiter LIII führt zu der Steuereinheit SE, die einen Fotoempfänger enthält, der das Licht in elektrische Signale umsetzt. Durch manuelles Verstellen der Steuereinheit SE wird die in Fig. 4 dargestellte Justiervorrichtung 12 derart eingestellt, daß der dritte Lichtleiter LIII die maximale Lichtmenge empfängt. Wenn dies geschieht, ist das Kopplungselement KE richtig eingestellt. Eine solche Feinjustierung ist nur bei Einzelmode-Lichtleitern erforderlich, nicht aber bei den Multimode-Lichtleitern LII und LIII. Diese Multimode-Lichtleiter können auch durch Steckverbindungen mit Geräten und untereinander verbunden werden, ohne daß zu starke Lichtverluste auftreten, weil Multimode-Lichtleiter einen relativ dikken lichtleitenden Kern haben.

Fig. 5 zeigt die optischen Kopf OK in Verbindung mit einer Vorsatzoptik VO1, die es erlaubt, größere Arbeitsabstände einzustellen. Durch die Vorsatzoptik VO1 wird der Parallelstrahl des optischen Kopfes OK von einer Negativlinse aufgeweitet und dann von einem entsprechend größeren Linsensystem L5 gesammelt, das dann das Meßvolumen im gewünschten größeren Abstand abbildet. Das Vorsatzobjektiv VO1 ist drehfest angeordnet, während der optische Kopf OK in der Drehvorrichtung DV drehbar ist.

Das in Fig. 6 dargestellte Vorsatzobjektiv VO2 dient dazu, einen abgeknickten Strahlengang unter Verwendung eines Spiegelprismas SP zu realisieren, wobei die Richtung, aus der die Strahlung auf das Meßvolumen MV fällt, unter einem Winkel zur optischen Achse des optischen Kopfes OK verläuft.

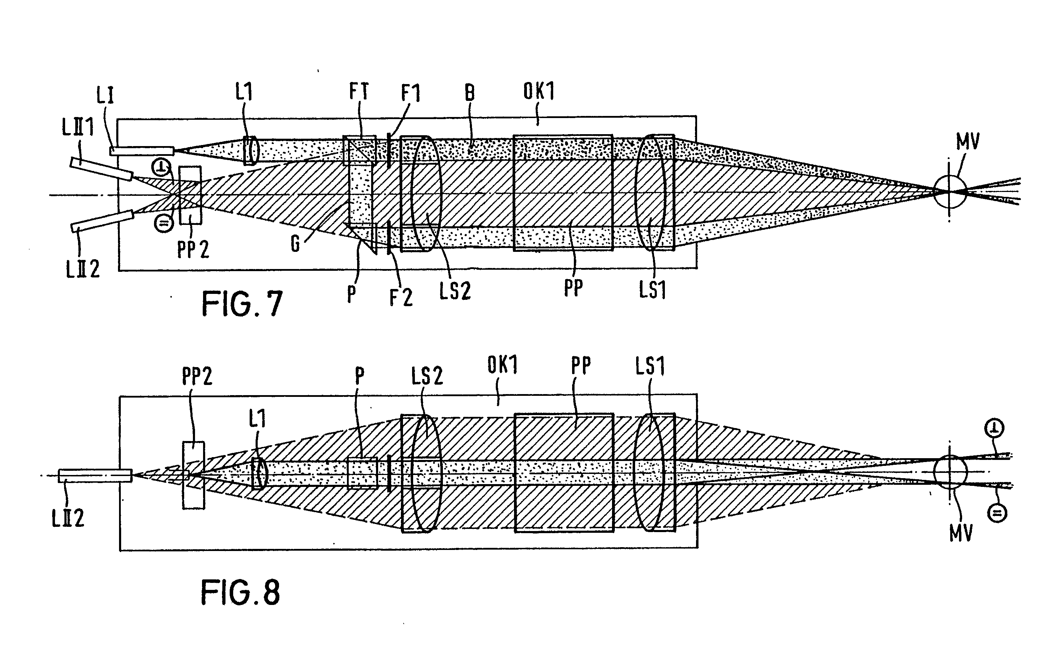

Das Ausführungsbeispiel der Fign. 7 und 8 entspricht weitgehend demjenigen der Fign. 2 und 3. Beide optischen Köpfe arbeiten nach dem Drei-Komponenten-Meßverfahren.

In den optischen Kopf OK1 der Fign. 7 und 8 ist nur ein einziger erster Lichtleiter LI hineingeführt, dessen divergent austretender Laserstrahl von der Linse L1 parallel gerichtet und einem dichroitischen Strahlenteiler FT zugeführt wird, der den mehrfarbigen Laserstrahl in einen geradlinig durchgehenden blauen Teilstrahl B und einen rechtwinklig abgelenkten grünen Teilstrahl G aufteilt. Der grüne Teilstrahl G wird durch eine Prisma P rechtwinklig abgelenkt, so daß er im folgenden parallel zu dem blauen Teilstrahl B und im Abstand von der optischen Achse des optischen Kopfes OK1 verläuft. Hinter dem Strahlenteiler FT und hinter dem Prisma P sind jeweils Linienfilter F1 und F2 zur Eliminierung der Restfarbanteile angeordnet. Der Strahlenteiler FT und das Prima P sind im Strahlengang des ankommenden Laserlichts vor dem zweiten Linsensystem LS2 angeordnet. Die beiden verschiedenfarbigen Teilstrahlen werden bei diesem System also innerhalb des optischen Kopfes OK1 erzeugt, dem nur ein einziger mehrfarbiger Laserstrahl zugeführt wird. In diesem Fall ist die Aufteilungseinheit AE aus Fig. 1 nicht erforderlich. Der Laserstrahl LS kann vielmehr in eines der Kopplungselemente KE1 oder KE2 eingekoppelt werden.

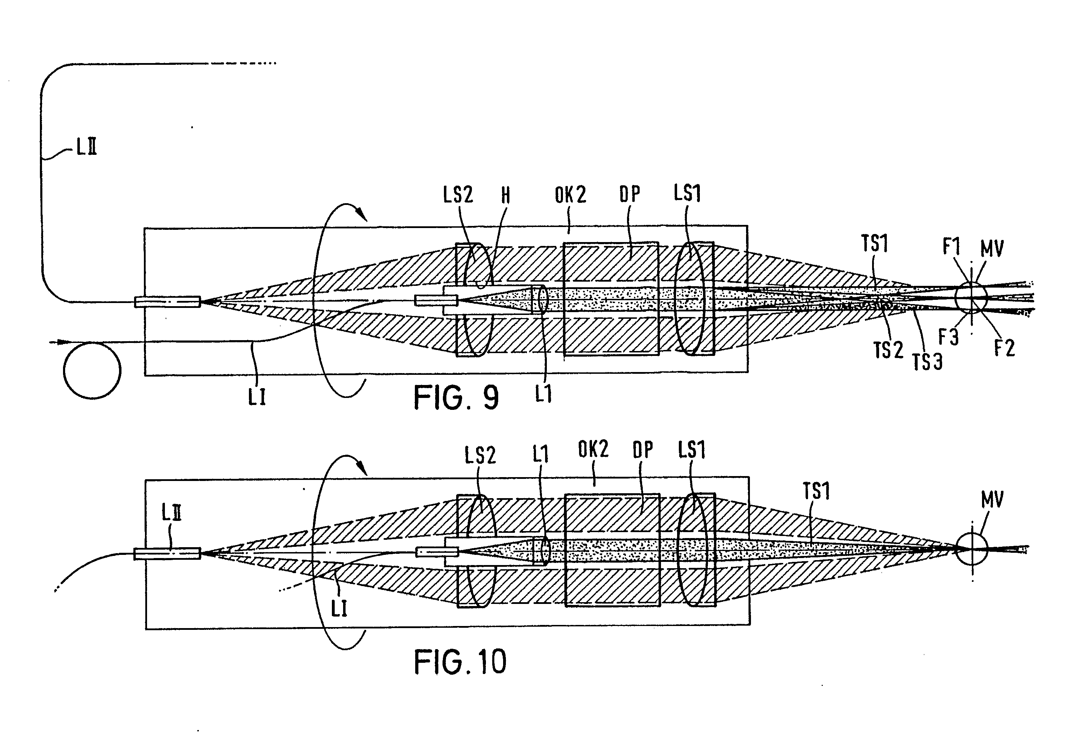

Fig. 9 zeigt den Strahlengang in einem optischen Kopf OK2 eines nach dem Zwei-Komponenten-Verfahren arbeitenden Systems, bei dem mehr als zwei verschiedenfarbige Teilstrahlen erzeugt werden, die mehr als zwei entlang einer gemeinsamen Geraden angeordnete Fokussierungsstellen F1,F2,F3 im Meßvolumen erzeugen. Da für die Auswertung nur zwei Fokussierungsstellen, nämlich für die Startimpulse und die Stopimpulse, erforderlich sind, können aus den zahlreichen Fokussierungsstellen jeweils zwei Fokussierungsstellen ausgewählt werden, deren Abstand ein für die Messung geeignetes Maß aufweist. Im vorliegenden Fall sind zur Verdeutlichung nur drei verschiedene Farben, die drei Fokussierungsstellen ergeben, dargestellt. In der Praxis können auch mehr Fokussierungsstellen erzeugt werden.

Gemäß Fign. 9 und 10 wird im optischen Kopf OK2 durch einen einzigen ersten Lichtleiter LI, bei dem es sich um einen Einzelmode-Lichtleiter handelt, ein mehrfarbiger Laserstrahl zugeführt. Das Ende des Lichtleiters LI befindet sich auf der optischen Achse des optischen Kopfes OK2. Der aus dem Lichtleiter LI austretende divergente Strahl wird durch ein zentrisches Loch H des zweiten Linsensystems LS2 hindurch einer Linse L1 zugeführt, die den Strahl parallel richtet, und durch ein Dispersionsprisma DP leitet. Im Dispersionsprisma DP wird der mehrfarbige Strahl in die verschiedenfarbigen Teilstrahlen TS1,TS2 und TS3 zerlegt, die vom ersten Linsensystem LS1 an den verschiedenen Fokussierungsstellen F1,F2 und F3 Meßvolumen MV fokussiert werden. Die Strahlung, die durch ein im Meßvolumen erscheinendes Teilchen reflektiert wird, wird entlang des schraffiert dargestellten Strahlenganges durch das erste Linsensystem LS1, das Dispersionsprisma DP und das zweite Linsensystem LS2 koaxial zur optischen Achse des optischen Kopfes OK2 zurückgeschickt und von dem zweiten Linsensystem LS2 auf den Einlaß des einzigen zweiten Lichtleiters LII fokussiert.

In der Lichtaufnahmevorrichtung LAV erfolgt durch ein weiteres (nicht dargestelltes) Dispersionsprisma eine Aufteilung des den zweiten Lichtleiter LI1 verlassenden Strahls in die verschiedenen Farben, wobei diejenigen Farben, deren Signale der Auswertevorrichtung AV zugeführt werden, ausgewählt werden können.

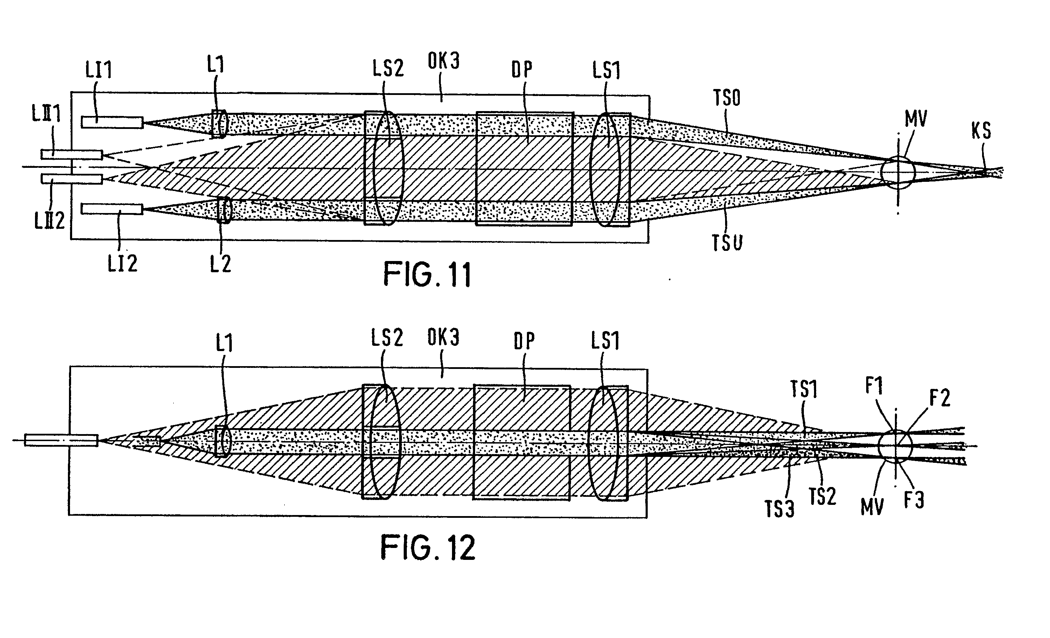

Der optische Kopf der Fign. 11 und 12 arbeitet nach dem Drei-Komponenten-Verfahren mit mehrfarbiger Strahlaufteilung. Die ersten Lichtleiter LI1 und LI2 sind Einzelmode-Lichtleiter, die jedoch nicht polarisationserhaltend sind. Das Ausführungsbeispiel der Fign. 11 und 12 entspricht weitgehend demjenigen der Fign. 2 und 3, mit Ausnahme der Tatsache, daß anstelle des Polarisations-Strahlenteilers PP ein Dispersions-Strahlenteiler DP (wie in Fign. 9 und 10) benutzt wird. Wenn die aus den beiden Lichtleitern LI1 und LI2 austretenden Teilstrahlen TSO und TSU das Dispersionsprisma DP durchlaufen, wird jeder dieser Teilstrahlen in mehrere verschiedenfarbige Teilstrahlen TS1,TS2 und TS3 aufgeteilt. Die beiden Teilstrahlen TS1 von TSO und TSU werden jeweils im Meßvolumen MV fokussiert. Wenn sich die Teilstrahlen TS1 des oberen und unteren Strahls TSO und TSU in ihren Fokussierungsstellen kreuzen würden, könnten ihre Lichtsignale nur voneinander getrennt werden, wenn beide Strahlen TSO und TSU unterschiedlich polarisiert sind. Eine unterschiedliche Polarisierung kann entweder in der Aufteilungseinheit AE (Fig. 1) oder im optischen Kopf OK3 vorgenommen werden. Wenn die ersten Lichtleiter LI1 und LI2 nicht polarisationserhaltend sind und wenn im optischen Kopf OK3 keine Polarisationsfilter enthalten sind, ergibt sich gemäß Fign. 11 und 12 die Möglichkeit, die Strahlen TSO und TSU sich nicht in dem durch die Fokussierungsstellen F1,F2,F3 definierten Meßvolumen MV kreuzen zu lassen, sondern die Kreuzungsstelle KS im Abstand vom Meßvolumen MV anzuordnen, so wie dies in Fig. 11 dargestellt ist. Die Fokussierungsstellen des oberen Strahls TSO werden dann auf dem Einlaß des Lichtleiters LII2 abgebildet, und die Fokussierungsstellen des unteren Strahls TSU auf dem Einlaß des Lichtleiters LII1.

Im übrigen kann die Ausführungsform der Fign. 11 und 12 auch mit einem Strahlenteiler FT und einem Prisma P gemäß Fig. 7 und 8 ausgestattet sein, wobei dann nur ein einziger erster Lichtleiter LI erforderlich ist.

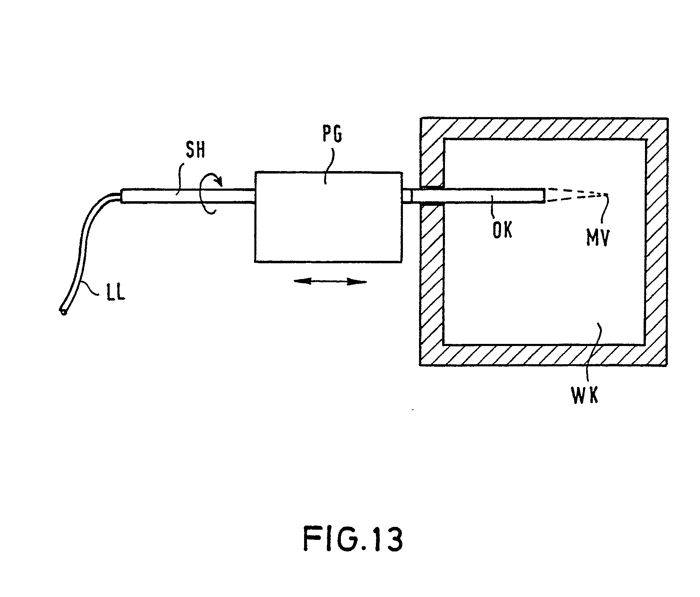

Fig. 13 zeigt eine Anwendungsmöglichkeit der Vorrichtung in einem Windkanal WK. Der optische Kopf OK ist an dem Schaft SH eines außerhalb des Windkanals angeordneten Positioniergerätes PG befestigt. Der Schaft SH kann von dem Positioniergerät PG um seine Längsachse herum gedreht und in Richtung der Längsachse verschoben werden. Der Schaft bzw. der optische Kopf OK ragt durch eine Öffnung der Wand des Windkanals hindurch, so daß sich sein vorderes Ende im Windkanal in einem bestimmten Abstand vom Meßvolumen MV befindet. Vom optischen Kopf OK führt mindestens ein Lichtleiter LL durch den hohlen Schaft SH hindurch zur Lichtaufnahmevorrichtung bzw. zu einer Verteilereinheit. Die bekannten Meßvorrichtungen zur Messung von Strömungsvektoren sind immer außerhalb des Windkanals angeordnet und ihr Strahlengang ist durch ein Fenster in der Wand des Windkanals gerichtet. Dadurch ergibt sich ein langer Weg zwischen der Optik und dem Meßvolumen mit der Folge, daß in der Optik Linsen mit großen Durchmessern verwendet werden müssen. Aus gleichem Grund sind auch große Fenster in der Wand des Kanals notwendig, die manchmal wegen der geometrischen Verhältnisse nicht untergebracht werden können. Durch die Verwendung eines optischen Kopfs mit geringem Durchmesser kann die Optik durch eine kleine Wandbohrung in den Windkanal hineingebracht werden. Der Abstand zwischen Optik und Meßvolumen kann so groß gewählt werden, daß Rückwirkungen der Optik auf die Strömung sich im Meßvolumen nicht auswirken.

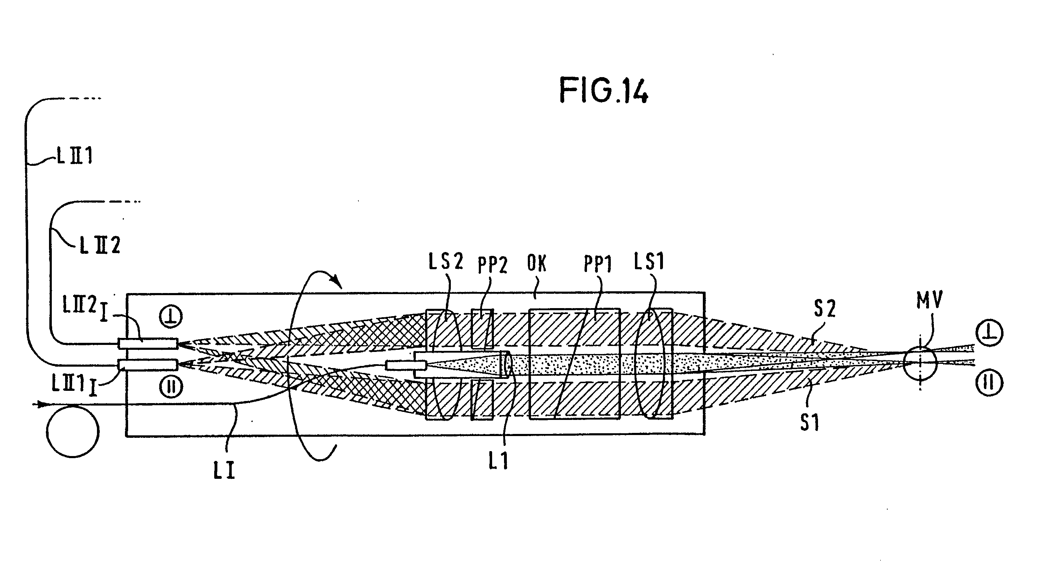

Bei dem Ausführungsbeispiel von Fig. 14 ist der Lichtleiter LI ein Monomode-Lichtleiter mit polarisationserhaltenden Eigenschaften. Das diesem Lichtleiter LI zugeführte Licht ist unter 45° polarisiert. Im Polarisationsprisma PP1 erfolgt eine Aufteilung des hinlaufenden Lichts in zwei intensitätsgleiche, zueinander polarisierte Strahlen, die unterschiedliche Austrittswinkel haben und somit räumlich voneinander getrennt werden. Man erhält durch die dem Polarisationsprisma PP1 nachgeordnete Linse LS1 zwei fokussierte Strahlen S1 und S2 im Meßvolumen MV mit unterschiedlichen Polarisierungsrichtungen. Der Strahl S1 ist parallel polarisiert und der Strahl S2 ist senkrecht polarisiert. Das Streulicht aus dem Meßvolumen MV wird vom äußeren Bereich der Linse LS1 aufgefangen und durch den Polarisationsstrahlteiler PP1 geleitet, wodurch die Aufteilung in die beiden Polarisationsrichtungen wieder rückgängig gemacht wird. Der mit einer Mittelöffnung versehene weitere Polarisationsstrahlteiler PP2 wird dazu verwendet, mittels der Linse LS2 das unterschiedlich polarisierte Streulicht aus den Fokussierungsstellen auf zwei ausreichend weit separierte Einkoppeleinheiten LII1$_I$ und LII2$_I$ abzubilden. Von den Einkoppeleinheiten führen Lichtleiter LI1 und LII2 an eine (nicht dargestellte) Auswerteeinheit zur Erzeugung der Start- und Stoppimpulse mit entsprechenden Fotodetektoren. Der Vorteil dieser Vorrichtung besteht darin, daß die Veränderung des gegenseitigen Abstands der Fokussierungsstellen durch Auswechseln des im hinlaufenden Strahlengang angeordneten Polarisationsprismas PP1 erfolgen kann, ohne daß sonstige Nachjustierungen vorgenommen werden müssen.

## Ansprüche

1.  Vorrichtung zur Messung von Strömungsvektoren in Gasströmungen, mit

    einer Laser-Lichtquelle (L),

    einem nachgeschalteten Strahlenteiler,

    einem ersten Linsensystem (LS1), das die von dem Strahlenteiler ausgehenden hinlaufenden Teilstrahlen allein oder zusammen mit einer Vorsatzoptik (VO) in einem Meßvolumen (MV) an nebeneinanderliegenden Fokussierungsstellen fokussiert, einem zweiten Linsensystem (LS2), das das vom Meßvolumen (MV) ausgehende rücklaufende Licht einer Lichtaufnahmevorrichtung (LAV) zuführt, welche das aus dem Meßvolumen (MV) empfangene Licht in räumlich getrennte Komponenten zerlegt, die den Teilstrahlen entsprechen,

    einer an die Lichtaufnahmevorrichtung (LAV) angeschlossenen Auswertevorrichtung (AV), die einen Startimpuls erzeugt, wenn ein Teilchen die Fokussierungsstelle eines Teilstrahls passiert, und einen Stopimpuls erzeugt, wenn dasselbe Teilchen anschließend die Fokussierungsstelle eines anderen Teilstrahls passiert, und

    einer im Strahlenweg der hinlaufenden Teilstrahlen und des rücklaufenden Lichts angeordneten drehbaren Bilddrehvorrichtung zur Veränderung der Richtung der durch die Fokussierungsstellen hindurchgehenden Geraden, wobei die Teilstrahlen an dem vorderen Ende der Bilddrehvorrichtung austreten

    **dadurch gekennzeichnet,**
    - daß die Bilddrehvorrichtung ein um seine optische Achse herum drehbarer optischer Kopf (OK) ist, der das erste Linsensystem (LS1) und das zweite Linsensystem (LS2) enthält und an dessen rückwärtiges Ende mindestens ein mit der Laser-Lichtquelle (L) verbundener flexibler erster Lichtleiter (LI) zum Einleiten des Lichts der Laser-Lichtquelle (L) und mindestens ein mit der Lichtaufnahmevorrichtung (LAV) verbundener flexibler zweiter Lichtleiter (LII), auf den die vom Meßvolumen (MV) ausgehende Strahlung mittels des zweiten Linsensystems (LS2) fokussiert ist, angeschlossen sind.

2.  Vorrichtung nach Anspruch 1, dadurch gekennzeichnet, daß der optische Kopf (OK) zwischen dem ersten und dem zweiten Linsensystem (LS1,LS2) einen Dispersions-Strahlenteiler (DT) oder einen Polarisations-Strahlenteiler (PP) enthält.

3.  Vorrichtung nach Anspruch 1 oder 2, dadurch gekennzeichnet, daß der Strahlenteiler (AE) außerhalb des optischen Kopfs angeordnet und über zwei erste Lichtleiter (LI₁, LI₂) mit dem optischen Kopf verbunden ist.

4. Vorrichtung nach einem der Ansprüche 1 bis 3, dadurch gekennzeichnet, daß aus dem optischen Kopf (OK) mindestens ein dritter Lichtleiter (LIII) herausführt, der das Licht des zweiten Linsensystems (LS2) empfängt, und mit einer Steuereinheit (SE) verbunden ist, durch welche ein Kopplungselement (KE) zum Einleiten des Laserstrahls (LS) in den ersten Lichtleiter (LI) derart einstellbar ist, daß der dritte Lichtleiter (LIII) eine maximale Lichtmenge empfängt.

5. Vorrichtung nach einem der Ansprüche 1 bis 4, dadurch gekennzeichnet, daß vor dem optischen Kopf (OK) eine nicht-drehbare auswechselbare Vorsatzoptik (VO) angeordnet ist.

6. Vorrichtung nach einem der Ansprüche 1 bis 5, dadurch gekennzeichnet, daß in den optischen Kopf (OK) zwei erste Lichtleiter im Abstand von der optischen Achse parallel hineinführen.

7. Vorrichtung nach einem der Ansprüche 1 bis 5, dadurch gekennzeichnet, daß in den optischen Kopf ein einziger erster Lichtleiter (LI) hineinführt und daß das aus diesem Lichtleiter austretende Licht einem Strahlenteiler (FT) und ein aus diesem Strahlteiler (FT) austretender Teilstrahl einer Umlenkeinrichtung (P) zugeführt wird, derart, daß zwei im Abstand von der optischen Achse verlaufende Teilstrahlen entstehen.

8. Vorrichtung nach einem der Ansprüche 1 bis 7, dadurch gekennzeichnet, daß der optische Kopf (OK) im Lichtweg hinter dem zweiten Linsensystem (LS2) einen Polarisations-Strahlenteiler (PP2) aufweist, der das vom Meßvolumen (MV) ausgehende Licht in zwei Komponenten zerlegt, von denen jede einem eigenen zweiten Lichtleiter (LII1, LII2) zugeführt wird.

9. Vorrichtung nach einem der Ansprüche 2 bis 8, dadurch gekennzeichnet, daß der Strahlenteiler ein Dispersions-Strahlenteiler (DP) ist, der mehr als zwei verschiedenfarbige Teilstrahlen (TS1,TS2,TS3) erzeugt, die im Meßvolumen (MV) an unterschiedlichen Stellen fokussiert werden.

10. Vorrichtung nach Anspruch 9, dadurch gekennzeichnet, daß zwei Strahlen (TSO,TSU), von denen jeder in mindestens zwei Teilstrahlen (TS1,TS2,TS3) zerlegt ist, sich im Abstand vom Meßvolumen (MV) kreuzen.

11. Vorrichtung nach einem der vorhergehenden Ansprüche, dadurch gekennzeichnet, daß die ersten Lichtleiter (LI) Einzelmode-Lichtleiter und die zweiten Lichtleiter (LII) Multimode-Lichtleiter sind.

## Claims

1. Apparatus for measuring flow vectors in gas currents, comprising
   - a laser light source (L),
   - a subsequently positioned beam divider,
   - a first lens system (LS1) which, alone or in combination with an optical unit (VO) positioned in front thereof, focuses at juxtaposed points in a measuring volume (MV) the forward partial beams emitted from the beam divider, a second lens system (LS2) directing the returning light from the measuring volume (MV) to a light receiving means (LAV) which splits the light received from the measuring volume (MV) into spatially separate components corresponding to the partial beams,
   - an evaluating means (AV) connected to the light receiving means (LAV) and producing a start pulse whenever a particle passes the focusing point of a partial beam, and producing a stop pulse whenever the same particle subsequently passes the focusing point of another partial beam, and
   - a rotatable image rotating device, arranged in the beam path of the forward partial beam and of the returning light, for changing the direction of the straight line passing through said focusing points, said partial beams emerging at the front end of said image rotating device, **characterized in that**
   - said image rotating device is an optical head (OK) rotatable about its optical axis and including said first lens system (LS1) and said second lens system (LS2), and having connected to its rear end at least one flexible first light conductor (LI) connected to said laser light source (L) for inducting the light of said laser light source (L), and at least one flexible second light conductor (LII) connected to said light receiving means (LAV), onto which the radiation coming from the measuring volume (MV) is focused by means of said second lens system (LS2).

2. Apparatus according to claim 1, characterized in that, between the first and the second lens system (LS1, LS2), the optical head (OK) contains a dispersion beam divider (DT) or a polarization beam divider (PP).

3. Apparatus according to claim 1 or 2, characterized in that said beam splitter (AE) is arranged outside said optical head and connected to said optical head via two first light conductors (LI₁, LI₂).

4. Apparatus according to one of the preceding claims 1 to 3, characterized in that out of the optical head (OK), there extends at least one third light conductor (LIII) receiving the light of said second lens system (LS2) and being connected to a control unit (SE) by which a coupling element (KE) is adjustable so as to feed the laser beam (LS) into the first light conductor (LI) so that the third light conductor (LIII) receives a maximum light quantity.

5. Apparatus according to one of claims 1 to 4, characterized in that a non-rotatable, interchangeable pre-positioned optical unit (VO) is mounted in front of the optical head (OK).

6. Apparatus according to one of claims 1 to 5, characterized in that two first light conductors extend in parallel in spaced relationship to the optical axis into the optical head (OK).

7. Apparatus according to one of claims 1 to 5, characterized in that one sole first light conductor (LI) extends into the optical head and that light emitted from said light conductor is directed to a beam divider (FT), and a partial beam emerging from said beam divider (FT) is directed to a deflection means (P) so that two partial beams are produced which extend at a distance from the optical axis.

8. Apparatus according to one of claims 1 to 7, characterized in that the optical head (OK) comprises a polarization beam divider (PP2) in the light path behind the second lens system (LS2), which splits the light emitted from the measuring volume (MV) into two components, each of which is passed to a respective second light conductor (LII1, LII2).

9. Apparatus according to one of claims 2 to 8, characterized in that the beam divider is a dispersion beam divider (DP) producing more than two differently colored partial beams (TS1, TS2, TS3) which are focused at different points in the measuring volume (MV).

10. Apparatus according to claim 9, characterized in that two beams (TSO, TSU) intersect at a distance from the measuring volume (MV), each of which is split into at least two partial beams (TS1, TS2, TS3).

11. Apparatus according to one of the preceding claims, characterized in that the first light conductors (LI) are of the single mode type while the second light conductors (LII) are of the multimode type.

**Revendications**

1. Dispositif pour mesurer des vecteurs d'écoulement dans des écoulements de gaz, avec :
   - une source de lumière laser (L),
   - un diviseur de rayons placé après celle-ci,
     - un premier système de lentilles (LS1) qui, seul ou conjointement avec une optique additionnelle (VO), focalise les rayons partiels entrants venant du diviseur de rayons dans un volume de mesure (MV), en des points de focalisation adjacents, un second système de lentilles (LS2) qui amène la lumière en retour venant du volume de mesure (MV) à un dispositif de réception de lumière (LAV) qui décompose la lumière reçue du volume de mesure (MV) en composantes séparées dans l'espace, qui correspondent aux rayons partiels,
     - un dispositif d'évaluation (AV) raccordé au dispositif de réception de lumière (LAV) qui produit une impulsion de départ lorsqu'une particule passe par le point de focalisation d'un rayon partiel et produit une impulsion d'arrêt lorsque la même particule passe ensuite par le point de focalisation d'un autre rayon partiel, et
     - un dispositif rotatif de rotation de l'image, disposé sur le trajet des rayons partiels entrants et de la lumière en retour, pour modifier la direction de la droite passant par les points de focalisation, les rayons partiels sortant à l'extrémité avant du dispositif de rotation de l'image,
       - caractérisé en ce que le dispositif de rotation de l'image est une tête optique (OK) rotative autour de son axe optique, qui contient le premier système de lentilles (LS1) et le second système de lentilles (LS2) et qu'à son extrémité arrière sont raccordés au moins un premier guide de lumière flexible (LI), raccordé à la source de lumière laser (L), pour l'amenée de la lumière de la source de lumière laser (L), et au moins un second guide de lumière flexible (LII), raccordé au dispositif de réception de lumière (LAV), sur lequel est focalisé, à l'aide du second système de lentilles (LS2), le rayonnement partant du volume de mesure (MV).

2. Dispositif suivant la revendication 1, caractérisé en ce que la tête optique (OK) contient, entre le premier et le second système de lentilles (LS1, LS2), un diviseur de rayons à dispersion (DT) ou un diviseur de rayons à polarisation (PP).

3. Dispositif suivant la revendication 1 ou 2, caractérisé en ce que le diviseur de rayons (AE) est disposé à l'extérieur de la tête optique et raccordé à la tête optique par deux premiers guides de lumière (LI1, LI2).

4. Dispositif suivant l'une des revendications 1 à 3, caractérisé en ce que de la tête optique (OK) part au moins un troisième guide de lumière (LIII) qui reçoit la lumière du second système de lentilles (LS2) et est raccordé à une unité de commande (SE) par laquelle un élément de couplage (KE) pour amener le rayon laser (LS) au premier guide de lumière (LI) peut être réglé de manière que le troisième guide de lumière (LIII) reçoive une quantité de lumière maximale.

5. Dispositif suivant l'une des revendications 1 à 4, caractérisé en ce que devant la tête optique (OK) est disposée une optique additionnelle (VO) échangeable non-rotative.

6. Dispositif suivant l'une des revendications 1 à 5, caractérisé en ce que deux premier guides de lumière conduisent, parallèlement et à distance de l'axe optique, à la tête optique (OK).

7. Dispositif suivant l'une des revendications 1 à 5, caractérisé en ce qu'un seul premier guide de lumière (LI) conduit à la tête optique et que la lumière sortant de ce guide de lumière est amenée à un diviseur de rayons (FT) et qu'un rayon partiel sortant de ce diviseur de rayons (FT) est amené à un dispositif de déviation (P), de manière qu'il se produise deux rayons partiels s'étendant à distance de l'axe optique.

8. Dispositif suivant l'une des revendications 1 à 7, caractérisé en ce que la tête optique (OK) présente sur le trajet de la lumière, derrière le second système de lentilles (LS2), un diviseur de rayons à polarisation (PP2) qui décompose la lumière sortant du volume de mesure (MV) en deux compôsantes, chacune d'elles étant amenée à un second guide de lumière propre (LII1, LII2).

9. Dispositif suivant l'une des revendications 2 à 8, caractérisé en ce que le diviseur de rayons est un diviseur de rayons à dispersion (DP) qui produit plus de deux rayons partiels (TS1, TS2, TS3) de couleur différente qui sont focalisés dans le volume de mesure (MV) sur des points différents.

10. Dispositif suivant la revendication 9, caractérisé en ce que deux rayons (TSO, TSU) se croisent à distance du volume de mesure (MV), chacun d'eux étant décomposé en au moins deux rayons partiels (TS1, TS2, TS3).

11. Dispositif suivant l'une des revendications précédentes, caractérisé en ce que les premiers guides de lumière (LI) sont des guides de lumière monomodes et les seconds guides de lumière (LII) sont des guide de lumière multimodes.

FIG. 1

EP 0 260 408 B1

FIG. 2

FIG. 3

EP 0 260 408 B1

FIG.4

FIG. 5

FIG. 6

FIG.7

FIG.8

EP 0 260 408 B1

FIG. 9

FIG. 10

FIG. 11

FIG. 12

EP 0 260 408 B1

**FIG.13**

# FIG.14

EP 0 260 408 B1